# EUROPEAN PATENT SPECIFICATION

(11) **EP 0 774 445 B1**
(45) Date of publication and mention of the grant of the patent: **28.02.2001**
(21) Application number: 95117916.7
(22) Date of filing: 14.11.1995
(51) Int. Cl.: C04B 24/38

(54) **Lime containing gypsum based plasters**
Kalkenthaltender Gipsputz
Plâtre à base de gypse contenant de la chaux

(43) Date of publication of application: 21.05.1997
(73) Proprietor: HERCULES INCORPORATED, Wilmington Delaware 19894-0001 (US)
(72) Inventor: Bietz, Rolf, 40789 Monheim (DE); Morgenroth, Christian, 45355 Essen (DE)
(74) Representative: Keller, Günter, Dr.

(56) References cited:
- EP-A- 0 295 628
- EP-A- 0 530 768
- EP-A- 0 554 749
- BE-A- 634 104
- FR-A- 1 389 133
- FR-A- 2 330 852
- FR-A- 2 388 871

## Description

The present invention concerns a lime containing gypsum based plaster.

A foam-containing slurry for making porous, inorganic construction materials on the basis of a hydraulic substance containing a foaming agent which comprises as the foaming component a water-soluble, low-viscosity cellulose derivative such as methylcellulose and as a foam stabilizer a water-soluble, high-viscosity cellulose derivative such as carboxymethylcellulose is disclosed in US 3,963,507.

US 4,218,258 discloses a hydraulic cement comprising an alkyl derivative of cellulose such as hydroxypropylmethylcellulose or sodiumcarboxymethylcellulose which provides an easily workable and applicable mortar/adhesive.

Alkylcellulose and/or hydroxyalkylcellulose is disclosed as binder for cement compositions in US 5,047,086.

A hydraulic cement having satisfactory compressive strength and bond strength comprising a water-soluble cellulose ether having a viscosity of 4,000 mPas to 30,000 mPas in 2% solution is disclosed in US 4,118,241.

US 3,090,693 discloses an additive for incorporation in hydraulic cement mixes which comprises a high-viscosity grade hydroxyalkylcellulose.

A mortar capable of being pumped under pressurized state over a long distance which comprises cement and an additive consisting of a high-viscous cellulose derivative like carboxymethylcellulose is disclosed in JP 88006514.

In several parts of the world walls are plastered with gypsum based plasters. These plasters can be applied by hand or machine. In order to achieve a smooth surface several steps of working are necessary. Normally plastering starts with applying the made-up plaster to the wall, either manually or by machine. Then normally two levelling steps follow which are called first and second levelling. Thereafter the finishing phase follows during which the stucco is felted and smoothened. All this work is done within 45-90 minutes (manually applied) or 2-3 hours (machine applied) and it is very important for the craftsmen to have enough time and during this time enough creamy gypsum especially for finishing the surface.

Therefore, it is necessary to add several additives to the plaster to be able to plaster the walls in an economic way. One additive is lime to obtain an alkaline plaster which is easier to be processed and has a more porous structure compared with neutral gypsum based plasters and which prevents metal parts like steel armings from corrosion. By adding further known additives water retention, stand up properties, volume (air-entraining agent) and adjusted setting time (set retarder) can be influenced.

The setting time can be prolonged with a higher content of set retarder. This mainly effects the time when the plaster begins to set and is connected with the final setting time. Thus, set retarders shift the beginning of the initial setting by a given time but once the setting has started they do not influence the further setting properties, i.e. the time from the beginning of the setting until the gypsum is finally hardened, the so-called "smoothing time", is not prolonged.

There is a need for a long time between the beginning and the end of the setting, i.e. a long time between the second levelling and the smoothing. This prolonged smoothing time is not achieved by the use of set retarders. In practice it is tried to achieve a prolonged smoothing time with a combination of set retarders and set accelerators, but often results are not satisfying due to the sensitivity of this system against fluctuation in dosage and raw materials.

Additives are also employed for preparing cement which is a hydraulic binder based on burnt lime and aluminium silicate. Gypsum may only be present as additive up to a certain limit. Cement basically differs from gypsum in that it is water resistent after setting whereas gypsum can be attacked by water even after its final setting. Therefore, gypsum does not for example set under water which is in contrast to cement.

It is an object of the present invention to provide an additive for lime containing gypsum based plaster compositions which prolonges the smoothing time of the plaster, i.e. the time between the beginning and the end of the setting.

Surprisingly it has now been found that the addition of carboxymethylcellulose to lime containing gypsum based plasters which comprise a non-ionic cellulose ether prolonges the smoothing time of the plaster and, thus, the time available for working in the finishing phase of that plaster. Since the beginning of the setting is not substantially retarded, this means an improvement of said finishing phase of the plaster, without a substantially longer working time in general.

For the purpose of this application all percent values will be given as percent by weight.

According to the present invention a lime containing gypsum based plaster composition is provided which comprises a non-ionic cellulose ether and carboxymethylcellulose, wherein the carboxymethylcellulose is present in an amount in the range of 0.003 to 0.05%, preferably about 0.006%.

The carboxymethylcellulose of the composition according to the present invention has preferably a degree of substitution (D.S.) of at least 0.9 and more preferably of about 1.2, i.e. the average number of carboxymethyl groups per anhydroglucose unit on the cellulose chain is at least 0.9 and preferably about 1.2.

Preferably the carboxymethylcellulose has a Brookfield viscosity in 2% aqueous solution at 25°C and 20 rpm of at least 500 mPas, more preferably of at least 2,000 mPas. The used carboxymethylcellulose should have a minimum purity of 95%, preferably 98%. Those carboxymethylcelluloses which are for example sold under the trademark "BLANOSE" by Aqualon are especially suitable for the purpose of this invention.

The compositions of the present invention comprise a non-ionic cellulose ether for water retention preferably in the range of 0.1 to 0.4% of the non-ionic cellulose ether, more preferably 0.2 to 0.3% and most preferably about 0.2%.

Suitable non-ionic cellulose ethers which may be employed alone or in combination may be selected from the group consisting of methylcellulose (MC), methylhydroxyethylcellulose (MHEC), methylhydroxypropylcellulose (MHPC), ethylhydroxyethylcellulose (EHEC), hydroxyethylcellulose (HEC), hydrophobically modified HEC (MhHEC) and carboxymethylmethylcellulose (CMMC). Mixed ethers with ionic and non-ionic substituents like CMMC are classified according to their predominant features as ionic or non-ionic. For the purpose of this invention mixed ethers may only be those which are classified as non-ionic. Especially preferred non-ionic cellulose ethers are MC, MHEC, MHPC and CMMC.

Preferably the non-ionic cellulose ether has a Brookfield viscosity in 2% aqueous solution at 25°C and 20 rpm (rounds per minute) in the range of 3,000 mPas to 50,000 mPas, more preferably in the range of 15,000 mPas to 30,000 mPas. For example those non-ionic cellulose ethers which are sold under the trademark "CULMINAL" by Aqualon are especially suitable for the purpose of the present invention.

As lime containing gypsum based plaster composition any conventional gypsum based plaster composition may be used. If lime is not already present in this gypsum based plaster composition it is added in sufficient quantity. Other known conventional additives may also be present or added before, with or after the non-ionic cellulose ether and carboxymethylcellulose.

The conventional gypsum based plaster composition may for example comprise a mixture of 25-70% of one or more fillers selected from the group consisiting of sand, dead-burnt gypsum (CaSO₄ without crystal water), silicates, carbonates and light weight aggregates, 30-60% gypsum (CaSO₄·0.5H₂O), 1-15% lime (Ca(OH)₂) and 0.05-0.1% of a set retarder, based on the total of the dry mixture.

As set retarders known complex forming agents such as tartaric acid, citric acid, malic acid and polyphosphates may be employed.

In a preferred embodiment the lime content of the gypsum based plaster composition is sufficient to obtain a usable plaster having a pH in the range of 10 to 13 upon adding water to the dry mixture until the desired consistency is reached.

The lime containing gypsum based plaster composition of the present invention may further comprise one or more conventional additives such as agents for improving the stand up properties of the plaster, air-entraining agents and thickening agents.

For example starch ethers like hydroxypropylstarch may be employed for improving the stand up properties of the plaster. The hydroxypropylstarch sold under the trademark "AMYLOTEX" by Aqualon is especially suitable for the present invention. The concentration of the stand up properties improving agent may preferably be in the range of 0.001 to 0.05% based on the total of the dry ingredients.

As air-entraining agent e.g. sodiumdodecylsulfate (sold under the trademark "SILIPON" by Aqualon) is suitable. The concentration of the air-entraining agent may preferably be in the range of 0.001 to 0.02% based on the total of the dry ingredients.

As thickening agent for example polymers of polyacrylamide may be employed.

Another embodiment of the present invention is an additive package for conventional lime containing gypsum based plasters, i.e. plaster compositions which do not comprise the cellulose ether mixture of the present invention. Such additive packages comprise a non-ionic cellulose ether and carboxymethylcellulose, wherein the additive package comprises 90-99% of the non-ionic cellulose ether and 1-10% of the carboxymethylcellulose. The preferred non-ionic cellulose ethers and the preferred physical properties (D.S. and/or viscosity) of the non-ionic cellulose ether and carboxymethylcellulose are as defined above.

The additive package may comprise further additives as defined above, but the presence of a thickening agent is preferred.

Yet another embodiment of the present invention is a process for preparing a lime containing gypsum based plaster which comprises (1) adding 1-15% lime to a powdery gypsum or employing a conventional lime containing gypsum, i.e. a lime containing gypsum which does not comprise a cellulose ether mixture of the present invention, in step (2), (2) adding the above additive package and (3) adding water to the desired consistency.

Preferably the additive package is added in step (2) in an amount of 0.1 to 0.4% of the total of the dry ingredients.

Another aspect of the present invention is the use of carboxymethylcellulose as additive for lime containing gypsum based plasters for prolonging the smoothing time of the plaster, wherein the carboxymethylcellulose has a degree of substitution of at least 0.9 and a Brookfield viscosity in 2% aqueous solution at 25°C and 20 rpm of at least 500 mPas. The preferred physical properties of the carboxymethylcellulose (D.S. and viscosity) are as defined above.

The additive package of the present invention may be employed with different plasters. In the following examples, gypsum lime machine plasters (about 5% hydrated lime, see Example 1), special plasters for light workability (1-3% hydrated lime, see Example 2) and gypsum machine plasters (about 1% hydrated lime, see Example 3) have been tested.

In all tested cases it was possible to improve the smoothing of plasters when 0.006% BLANOSE type 12M31PD which is a sodium carboxymethylcellulose having a D.S. of 1.2 and a viscosity of a 2% solution at 25°C of 2,800 mPas was added to the mortar (calculated on dry mortar) which corresponds to 3% on the amount of the used methylhydroxyethylcellulose (CULMINAL).

Although the effectiveness of the additive package can be seen in manually and machine applied plasters the following examples were done in machine plasters because in these cases a long smoothing phase is especially appreciated. By using machines for producing and applying the gypsum plaster it is very important to have a long period of time between the onset of setting and the time when the plaster is rigid. The gypsum plaster is mixed in the machine and applied to the walls. It is only possible to change the shape of the plaster during the smoothing period. The longer the smoothing time the more comfortable to work with the plaster.

Figure 1 shows a plot of the penetration depth measured in gypsum machine plaster with and without carboxymethylcellulose as a function of the setting time.

Figure 2 shows a plot of the prolongation of the setting time of gypsum machine plaster by using carboxymethylcellulose as a function of the penetration depth.

The following examples will further illustrate the present invention.

### Examples 1-3

All examples were carried out as spray tests with lime containing gypsum based plasters with and without the addition of carboxymethylcellulose. In all cases methylhydroxyethylcellulose (CULMINAL) was employed. The results of the tests were found by spray trials with a spray plastering machine ("Putz- und Fordertechnik PFT G4"). The substrates were high absorbing lime sand stones and the temperature at the tests was about 23°C. The given mortar pressure in the hose is based on a hose length of 20 m and the water demand is that quantity of water used in the machine per hour. The results of Examples 1-3 are given in the following Tables 1-3, respectively.

### Example 1

**Table 1**

| | Gypsum lime plaster | Gypsum lime plaster |
|---|---|---|
| CULMINAL* | 0.21% | 0.21% |
| BLANOSE 12M31PD* | ____ | 0.006% |
| AMYLOTEX 8100* | 0.01% | 0.01% |
| SILIPON RN 6031* | 0.02% | 0.02% |
| water demand | 740 l/h | 740 l/h |
| mortar pressure | 18 bar | 16 bar |
| spreading value | 165 mm | 170 mm |
| mortar density | 1.615 kg/l | 1.617 kg/l |
| stand up | good | very good |
| 1. levelling | good | good |
| 2. levelling | good 55 min | good 65 min |
| felting | good 70 min | good 85 min |
| smoothing | good 130 min | excellent 145 min |
| cracks | none | none |

| | | |
|---|---|---|
| *In Tables 1-3 the used trademarks represent the following additives: CULMINAL: methylhydroxyethylcellulose BLANOSE 12M31DP: sodium carboxymethylcellulose (D.S. 1.2, viscosity 2,800 mPas) AMYLOTEX 8100: hydroxypropylstarch SILIPON RN 6031: sodiumdodecylsulfate | | |

### Example 2

**Table 2**

| | Plaster for light workability | Plaster for light workability |
|---|---|---|
| CULMINAL | 0.23% | 0.23% |
| BLANOSE 12M31PD | ____ | 0.006% |
| AMYLOTEX 8100 | 0.005% | 0.005% |
| SILIPON RN 6031 | 0.01% | 0.01% |
| water demand | 700 l/h | 720 l/h |
| mortar pressure | 10 bar | 10 bar |
| penetration funnel | 45 mm | 47 mm |
| DIN 4211 | | |
| mortar density | 1.403 kg/l | 1.430 kg/l |
| stand up | good | good |
| 1. levelling | good | good |
| 2. levelling | good 60 min | good 65 min |
| felting | good 105 min | good 125 min |
| smoothing | good 140 min | excellent 165 min |
| cracks | none | none |

### Example 3

**Table 3**

| | Gypsum plaster | Gypsum plaster |
|---|---|---|
| CULMINAL | 0.20% | 0.20% |
| BLANOSE 12M31PD | ― | 0.006% |
| AMYLOTEX 8100 | 0.01% | 0.01% |
| SILIPON RN 6031 | 0.01% | 0.01% |
| water demand | 760 l/h | 760 l/h |
| mortar pressure | 18 bar | 19 bar |
| spreading value | 158 mm | 158 mm |
| mortar density | 1.61 kg/l | 1.60 kg/l |
| stand up | good | very good |
| 1. levelling | good | very good |
| 2. levelling | good 75 min | good 75 min |
| felting | good 85 min | good 100 min |
| smoothing | good 110 min | excellent 125 min |
| cracks | none | none |

The Examples 1-3 show that the addition of carboxymethylcellulose prolongs the smoothing time.

### Example 4

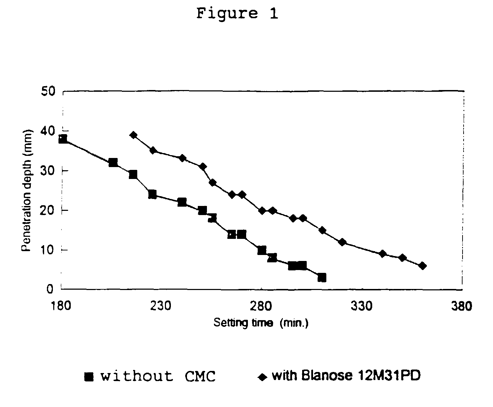

The setting characteristics of a gypsum machine plaster with and without the addition of carboxymethylcellulose (BLANOSE 12M31PD) were determined according to DIN 1168T2. The results are given in Table 4 and Figure 1.

**Table 4**

| setting time (min.) | without CMC penetration depth (mm) | with CMC penetration depth (mm) |
|---|---|---|
| 180 | 38 | |
| 205 | 32 | |
| 215 | 29 | 39 |
| 225 | 24 | 35 |
| 240 | 22 | 33 |
| 250 | 20 | 31 |
| 255 | 18 | 27 |
| 265 | 14 | 24 |
| 270 | 14 | 24 |
| 280 | 10 | 20 |
| 285 | 8 | 20 |
| 295 | 6 | 18 |
| 300 | 6 | 18 |
| 310 | 3 | 15 |
| 320 | | 12 |
| 340 | | 9 |
| 350 | | 8 |
| 360 | | 6 |

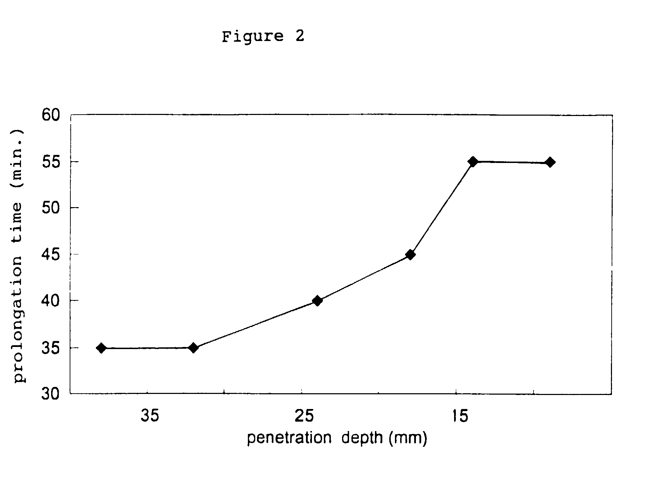

From these results the prolongations of the setting times until the gypsum reaches specific degrees of hardness given as penetration depth were calculated and the results are given in Table 5 and Figure 2.

**Table 5**

| penetration depth (mm) | prolongation time (min.) |
|---|---|
| 38 | 35 |
| 32 | 35 |
| 24 | 40 |
| 18 | 45 |
| 14 | 55 |
| 9 | 55 |

Example 4 demonstrates that the addition of carboxymethylcellulose does not only prolong the setting time until the gypsum is finally hardened but also prolongs the smoothing time (increasing prolongation time with increasing hardness of the gypsum).

### Example 5

The influence of the degree of substitution of the carboxymethylcellulose on the finishing of gypsum based plasters was investigated using different types of BLANOSE in an otherwise unchanged lime containing gypsum based plaster composition. The results are given in Table 6.

**Table 6**

| Blanose | DS | Viscosity 2% Brookfield 25°C | Finishing of plaster | Time between spraying and smoothing |
|---|---|---|---|---|
| without | --- | ---- | dry | 110 min |
| 7M31F | 0.7 | 2600 mPas | dry | 110 min |
| 9M31FD | 0.9 | 3050 mPas | slight creamy | 115 min |
| 12M31PD | 1.2 | 2800 mPas | good, creamy | 125 min |

### Example 6

The influence of the molecular weight and thus the viscosity of the carboxymethylcellulose with constant D.S. was investigated using different types of BLANOSE in an otherwise unchanged lime containing gypsum based plaster composition. The results are given in Table 7.

**Table 7**

| Blanose | DS | Viscosity 2% Brookfield 25°C | Finishing of plaster | Time between spraying and smoothing |
|---|---|---|---|---|
| without | --- | ----- | dry | 115 min |
| 12M8PD | 1.2 | 600 mPas | slight creamy | 120 min |
| 12M31PD | 1.2 | 2800 mPas | good, creamy | 135 min |

## Claims

1. Lime containing gypsum based plaster composition, which comprises a non-ionic cellulose ether and carboxymethylcellulose, wherein the carboxymethylcellulose is present in an amount of 0.003 to 0.05% by weight based on the total weight of the dry ingredients.

2. Composition according to claim 1, wherein the carboxymethylcellulose has a degree of substitution of at least 0.9.

3. Composition according to any of the preceding claims, wherein the carboxymethylcellulose has a Brookfield viscosity in 2% aqueous solution at 25°C and 20 rpm of at least 500 mPas.

4. Composition according to any of the preceding claims, wherein the carboxymethylcellulose is sodium carboxymethylcellulose.

5. Composition according to any of the preceding claims, wherein the non-ionic cellulose ether is present in an amount of 0.1 to 0.4% by weight based on the total weight of the dry ingredients.

6. Composition according to any of the preceding claims, wherein the non-ionic cellulose ether is selected from the group consisting of methylcellulose (MC), methylhydroxyethylcellulose (MHEC), methylhydroxypropylcellulose (MHPC), ethylhydroxyethylcellulose (EHEC), hydroxyethylcellulose (HEC), hydrophobically modified HEC (MhHEC) and carboxymethylmethylcellulose (CMMC).

7. Composition according to any of the preceding claims, wherein the non-ionic cellulose ether has a Brookfield viscosity in 2% aqueous solution at 25°C and 20 rpm in the range of 3,000 mPas to 50,000 mPas.

8. Composition according to any of the preceding claims, which further comprises a mixture of 25-70% by weight of one or more fillers selected from the group consisting of sand, dead-burnt gypsum (CaSO₄ without crystal water), silicates, carbonates and light weight aggregates, 30-60% by weight gypsum (CaSO₄·0.5 H₂O), 1-15% by weight lime (Ca(OH)₂) and 0.05-0.1% by weight of a set retarder, the percent values being based on the total of the dry mixture.

9. Composition of any of the preceding claims, wherein the lime content is sufficient to obtain a usable plaster having a pH in the range of 10 to 13.

10. Composition of any of the preceding claims, which further comprises one or more additives selected from the group consisting of agents for improving the stand up properties, air-entraining agents and thickening agents.

11. Additive package for conventional lime containing gypsum based plasters, comprising 90-99% by weight non-ionic cellulose ether and 1-10% by weight carboxymethylcellulose.

12. Additive package according to claim 11, wherein the non-ionic cellulose ether is selected from the group consisting of methylcellulose (MC), methylhydroxyethylcellulose (MHEC), methylhydroxypropylcellulose (MHPC), ethylhydroxyethylcellulose (EHEC), hydroxyethylcellulose (HEC), hydrophobically modified HEC (MhHEC) and carboxymethylmethylcellulose (CMMC).

13. Additive package according to claims 11 or 12, wherein the non-ionic cellulose ether has a Brookfield viscosity in 2% aqueous solution at 25°C and 20 rpm in the range of 3,000 mPas to 50,000 mPas.

14. Additive package according to any of claims 11-13, wherein the carboxymethylcellulose has a degree of substitution of at least 0.9.

15. Additive package according to any of claims 11-14, wherein the carboxymethylcellulose has a Brookfield viscosity in 2% aqueous solution at 25°C and 20 rpm of at least 500 mPas.

16. Additive package according to any of claims 11-15, which further comprises a thickening agent.

17. Process for preparing a lime containing gypsum based plaster which comprises (1) adding 1-15% by weight lime to a powdered gypsum or employing a conventional lime containing gypsum in step (2), (2) adding the additive package of any of claims 11-16 and (3) adding water to the desired consistency.

18. Process according to claim 17, wherein in step (2) 0.1-0.4% by weight of the additive package is added based on the total of the dry ingredients.

19. Use of carboxymethylcellulose as additive for lime containing gypsum based plasters for prolonging the smoothing time of the plaster, wherein
a) the carboxymethylcellulose has a degree of substitution of at least 0.9;
b) the carboxymethylcellulose has a Brookfield viscosity in 2% aqueous solution at 25°C and 20 rpm of at least 500 mPas.

## Patentansprüche

1. Kalkhaltige Gipsputzzusammensetzung, die einen nichtionischen Celluloseether und Carboxymethylcellulose umfasst, wobei die Carboxymethylcellulose in einer Menge von 0,003 bis 0,05 Gew.-%, bezogen auf das Gesamtgewicht der trockenen Inhaltsstoffe, vorhanden ist.

2. Zusammensetzung nach Anspruch 1, wobei die Carboxymethylcellulose einen Substitutionsgrad von mindestens 0,9 hat.

3. Zusammensetzung nach einem der vorhergehenden Ansprüche, wobei die Carboxymethylcellulose eine Brookfield-Viskosität in 2%iger wässriger Lösung bei 25°C und 20 Upm von mindestens 500 mPa·s hat.

4. Zusammensetzung nach einem der vorhergehenden Ansprüche, wobei die Carboxymethylcellulose Natriumcarboxymethylcellulose ist.

5. Zusammensetzung nach einem der vorhergehenden Ansprüche, wobei der nichtionische Celluloseether in einer Menge von 0,1 bis 0,4 Gew.-%, bezogen auf das Gesamtgewicht der trockenen Inhaltsstoffe, vorhanden ist.

6. Zusammensetzung nach einem der vorhergehenden Ansprüche, wobei der nichtionische Celluloseether ausgewählt ist aus der Gruppe bestehend aus Methylcellulose (MC), Methylhydroxyethylcellulose (MHEC), Methylhydroxypropylcellulose (MHPC), Ethylhydroxyethylcellulose (EHEC), Hydroxyethylcellulose (HEC), hydrophob modifizierter HEC (MhHEC) und Carboxymethylmethylcellulose (CMMC).

7. Zusammensetzung nach einem der vorhergehenden Ansprüche, worin der nichtionische Celluloseether eine Brookfield-Viskosität in 2%iger wässriger Lösung bei 25°C und 20 Upm im Bereich von 3000 mPa·s bis 50 000 mPa·s hat.

8. Zusammensetzung nach einem der vorhergehenden Ansprüche, die weiterhin eine Mischung von 25 bis 70 Gew.-% eines oder mehrerer Füllstoffe umfasst, die ausgewählt sind aus der Gruppe bestehend aus Sand, totgebranntem Gips (CaSO₄ ohne Kristallwasser), Silicaten, Carbonaten und leichtgewichtigen Aggregaten, 30 bis 60 Gew.-% Gips (CaSO₄·0,5 H₂O), 1 bis 15 Gew.-% Kalk (Ca(OH)₂) und 0,05 bis 0,1 Gew.-% eines Abbindeverzögerers, wobei die Prozentangaben sich auf die Gesamtmenge der trockenen Mischung beziehen.

9. Zusammensetzung nach einem der vorhergehenden Ansprüche, wobei der Kalkgehalt ausreichend ist, um einen verwendbaren Putz mit einem pH im Bereich von 10 bis 13 zu erhalten.

10. Zusammensetzung nach einem der vorhergehenden Ansprüche, die weiterhin ein oder mehrere Additive ausgewählt aus der Gruppe bestehend aus Mitteln zur Verbesserung der Standeigenschaften, Luftporen bildenden Mitteln und Verdickungsmitteln umfasst.

11. Additivpackung für übliche kalkhaltige Gipsputze umfassend 90 bis 99 Gew.-% nichtionischen Celluloseether und 1 bis 10 Gew.-% Carboxymethylcellulose.

12. Additivpackung nach Anspruch 11, wobei der nichtionische Celluloseether ausgewählt ist aus der Gruppe bestehend aus Methylcellulose (MC), Methylhydroxyethylcellulose (MHEC), Methylhydroxypropylcellulose (MHPC), Ethylhydroxyethylcellulose (EHEC), Hydroxyethylcellulose (HEC), hydrophob modifizierter HEC (MhHEC) und Carboxymethylmethylcellulose (CMMC).

13. Additivpackung nach einem der Ansprüche 11 oder 12, wobei der nichtionische Celluloseether eine Brookfield-Viskosität in 2%iger wässriger Lösung bei 25°C und 20 Upm im Bereich von 3000 mPa·s bis 50 000 mPa·s hat.

14. Additivpackung nach einem der Ansprüche 11 bis 13, wobei die Carboxymethylcellulose einen Substitutionsgrad von mindestens 0,9 hat.

15. Additivpackung nach einem der Ansprüche 11 bis 14, wobei die Carboxymethylcellulose eine Brookfield-Viskosität in 2%iger wässriger Lösung bei 25°C und 20 Upm von mindestens 500 mPa·s hat.

16. Additivpackung nach einem der Ansprüche 11 bis 15, die weiterhin ein Verdickungsmittel umfasst.

17. Verfahren zur Herstellung eines kalkhaltigen Gipsputzes, das umfasst, dass man (1) 1 bis 15 Gew.-% Kalk zu einem pulverförmigen Gips zugibt oder einen üblichen kalkhaltigen Gips in Stufe (2) anwendet, (2) die Additivpackung irgendeines der Ansprüche 11 bis 16 zugibt und (3) Wasser bis zu der gewünschten Konsistenz zugibt.

18. Verfahren nach Anspruch 17, wobei in Stufe (2) 0,1 bis 0,4 Gew.-% der Additivpackung zugegeben werden auf Basis der Gesamtmenge der trockenen Inhaltsstoffe.

19. Verwendung von Carboxymethylcellulose als Additiv für kalkhaltige Gipsputze, um die Glättungszeit des Putzes zu verlängern, wobei
a) die Carboxymethylcellulose einen Substitutionsgrad von mindestens 0,9 hat;
b) die Carboxymethylcellulose eine Brookfield-Viskosität in 2%iger wässriger Lösung bei 25°C und 20 Upm von mindestens 500 mPa·s hat.

## Revendications

1. Composition de plâtre à base de gypse contenant de la chaux, comprenant un éther cellulosique non ionique et de la carboxyméthylcellulose, dans laquelle la carboxyméthylcellulose est présente à raison d'environ 0,003 à 0,05% en poids, par rapport au poids total des ingrédients secs.

2. Composition selon la revendication 1, caractérisée en ce que la carboxyméthylcellulose présente un degré de substitution d'au moins 0,9.

3. Composition selon l'une des revendications qui précèdent, caractérisée en ce que la carboxyméthylcellulose présente une viscosité Brookfield d'au moins 500 mPas, en solution aqueuse à 2%, à 25°C et 20 trs/min.

4. Composition selon l'une des revendications qui précèdent, caractérisée en ce que la carboxyméthylcellulose est de la carboxyméthylcellulose sodique.

5. Composition selon l'une des revendications qui précèdent, caractérisée en ce que l'éther cellulosique non ionique est présent à raison de 0,1 à 0,4% en poids, par rapport au poids total des ingrédients secs.

6. Composition selon l'une des revendications qui précédent, caractérisée en ce que l'éther cellulosique non ionique est choisi dans le groupe formé par la méthylcellulose (MC), la méthylhydroxyéthylcellulose (MHEC), la méthylhydroxypropylcellulose (MHPC), l'éthylhydroxyéthylcellulose (EHEC), l'hydroxyéthylcellulose (HEC), la HEC modifiée à propriétés hydrophobes, (MhHEC) et la carboxyméthylméthylcellulose (CMMC).

7. Composition selon l'une des revendications qui précèdent, caractérisée en ce que l'éther cellulosique non ionique présente une viscosité Brookfield de l'ordre de 3.000 mPas à 50.000 mPas, en solution aqueuse à 2%, à 25°C et 20 trs/min.

8. Composition selon l'une des revendications qui précèdent, comprenant en outre un mélange de 25 à 70% en poids d'une ou plusieurs charges choisies dans le groupe formé par du sable, du gypse surcuit (CaSO₄ sans eau de cristallisation), des silicates, des carbonates et des agrégats légers, 30 à 60% en poids de gypse (CaSO₄.O,5H₂O), 1 à 15% en poids de chaux (Ca(OH)₂) et 0,05 à 0,1% en poids d'un retardateur de prise, sur base de la totalité du mélange sec.

9. Composition selon l'une des revendications qui précédent, caractérisée en ce que la teneur en chaux est suffisante pour obtenir un plâtre utilisable présentant un pH de l'ordre de 10 à 13.

10. Composition selon l'une des revendications qui précèdent, comprenant en outre un ou plusieurs additifs choisis dans le groupe formé par des agents améliorant les propriétés de tenue, des agents entraîneurs d'air et des agents épaississants.

11. Système d'additifs pour plâtres à base de gypse contenant de la chaux conventionnels, comprenant de 90 à 99% en poids d'un éther cellulosique non ionique et de 1 à 10% en poids de carboxyméthylcellulose.

12. Système d'additifs selon la revendication 11, caractérisé en ce que l'éther cellulosique non ionique est choisi dans le groupe formé par la méthylcellulose (MC), la méthylhydroxyéthylcellulose (MHEC), la méthylhydroxypropylcellulose (MHPC), l'éthylhydroxyéthylcellulose (EHEC), l'hydroxyéthylcellulose (HEC), la HEC modifiée à propriétés hydrophobes, (MhHEC) et la carboxyméthylméthylcellulose (CMMC).

13. Système d'additifs selon les revendications 11 ou 12, caractérisé en ce que l'éther cellulosique non ionique présente une viscosité Brookfield de l'ordre de 3.000 mPas à 50.000 mPas, en solution aqueuse à 2%, à 25°C et 20 trs/min.

14. Système d'additifs selon l'une quelconque des revendications 11 à 13, caractérisé en ce que la carboxyméthylcellulose présente un degré de substitution d'au moins 0,9.

15. Système d'additifs selon l'une quelconque des revendications 11 à 14, caractérisé en ce que la carboxyméthylcellulose présente une viscosité Brookfield d'au moins 500 mPas, en solution aqueuse à 2%, à 25°C et 20 trs/min.

16. Système d'additifs selon l'une quelconque des revendications 11 à 15, comprenant en outre un agent épaississant.

17. Procédé de préparation d'un plâtre à base de gypse contenant de la chaux, comprenant (1) l'addition de 1 à 15% en poids de chaux à du gypse pulvérisé ou l'utilisation d'un gypse contenant de la chaux conventionnel à l'étape (2), (2) l'addition du système d'additifs selon l'une des revendications 11 à 16 et (3) l'addition d'eau jusqu'à la consistance souhaitée.

18. Procédé selon la revendication 17, caractérisé en ce qu'à l'étape (2), on ajoute de 0,1 à 0,4% en poids du système d'additifs, par rapport au total des ingrédients secs.

19. Utilisation de carboxyméthylcellulose en tant qu'additif pour des plâtres à base de gypse contenant de la chaux, afin de prolonger le délai de lissage du plâtre, dans lequel
a) la carboxyméthylcellulose présente un degré de substitution d'au moins 0,9;
b) la carboxyméthylcellulose présente une viscosité Brookfield d'au moins 500 mPas, en solution aqueuse à 2%, à 25°C et 20 trs/min.
